# EUROPEAN PATENT APPLICATION

(11) **EP 2 916 486 A1**
(43) Date of publication of application: **09.09.2015**
(21) Application number: 12890377.0
(22) Date of filing: 20.12.2012
(51) Int. Cl.: H04L 12/24

(54) **SERVICE PROTECTION METHOD, OPTICAL LINE TERMINAL AND SYSTEM IN PASSIVE OPTICAL NETWORK**

(71) Applicant: Huawei Technologies Co., Ltd., Longgang District Shenzhen, Guangdong 518129 (CN)
(72) Inventor: PU, Yun, Shenzhen Guangdong 518129 (CN)
(74) Representative: Pfenning, Meinig & Partner GbR
(86) International application number: PCT/CN2012/086996
(87) International publication number: WO 2014/094268

(57) **Abstract**

Embodiments of present invention disclose a service protection method, an optical line terminal, and a system in a passive optical network and relate to the communications field, which not only implements service protection after a fault occurs on a working link between a first OLT and a switching device, but also implements service protection after a fault occurs on a second VLAN service channel, thereby ensuring normal access of service data, thereby ensuring normal access of service data. A specific solution is as follows: A second VLAN service channel is set between a second OLT and a switching device; when a fault occurs on an active link, the second OLT performs active/standby switchover, receives service data from an ONT, and sends the service data to the switching device through the second VLAN service channel. The present invention is applied in a process of dual-homing protection among network device nodes.

## Description

### TECHNICAL FIELD

The present invention relates to the communications field, and in particular, to a service protection method, an optical line terminal, and a system in a passive optical network.

### BACKGROUND

By means of a dual-homing protection technology, one network node can be connected to two different network devices in another network area by using an active link and a standby link, so as to improve reliability of a link transmission service by using mutual backup between the active link and the standby link. A common multi-chassis link aggregation group (Multi-chassis Link Aggregation Group, MC-LAG) dual-homing protection technology can only be applied only to an Ethernet link. As for a passive optical network (Passive Optical Network, PON) link, dual-homing protection for the passive optical network link can be implemented by extending a line TYPE B or TYPE C/TYPE D protection technology.

In the prior art, by using TYPE B and TYPE C/TYPE D protection technologies, an optical network terminal (Optical Network Unit, ONT) may be dual-homed to two optical line terminals (Optical Line Terminal, OLT) (an active optical line terminal OLT1 and a standby optical line terminal OLT2), and it is ensured that service information of a PON port of the OLT1 is simultaneously backed up to a PON port of the OLT2. To improve reliability of service transmission between an OLT and a remote switching device, a service linear protection switching mechanism that is based on a virtual local area network (Virtual Local Area Network, VLAN) and that is defined in the G.8031 standard is applied in the prior art. Specifically, two VLAN service channels (VLAN X and VLAN Y) that protect each other are established between OLT1 and the remote switching device, where VLAN X is a working service channel, and VLAN Y is a protection service channel. When VLAN X is faulty, a service can be switched to VLAN Y, so that normal access of a service on the ONT can be ensured.

In the prior art, after a working link between the ONT and the OLT1 is faulty, the OLT2 may switch a service on the working link between the ONT and the OLT1 to a working link between the OLT2 and the ONT by opening a PON port between the OLT2 and the ONT, which allows the service on the ONT to access a network through a protection link between the ONT and the OLT2. However, both VLAN X and VLAN Y are established based on the OLT1; therefore, the OLT2 cannot establish a connection to the remote switching device by using VLAN Y, so that service protection cannot be implemented after the working link between the OLT1 and the ONT is faulty, and further, normal access of service data cannot be ensured.

### SUMMARY

Embodiments of the present invention provide a service protection method, an optical line terminal and a system in a passive optical network, which not only implements service protection after a fault occurs on a VLAN service channel between an OLT1 and a switching device, but also implements service protection after a fault occurs on a working link between the OLT1 and an ONT, thereby ensuring normal access of service data.

According to a first aspect, an embodiment of the present invention provides a service protection method in a passive optical network, where the PON includes an optical network terminal ONT, a first optical line terminal OLT, a second OLT, and a switching device, where the ONT connects to the switching device by using the first OLT, so as to form an active link, the ONT connects to the switching device by using the second OLT, so as to form a standby link, a first virtual local area network VLAN service channel is set between the first OLT and the switching device, a second VLAN service channel is set between the second OLT and the switching device, and the first VLAN service channel and the second service channel are in a reciprocal active/standby relationship; and the method includes:
when a fault occurs on the active link, performing, by the second OLT,
active/standby switchover, receiving service data from the ONT, and
sending the service data to the switching device through the second VLAN service channel.

With reference to the first aspect, in a possible implementation manner, the second OLT connects to the ONT through a first PON port on the second OLT, and the second OLT connects to the first OLT through a second PON port on the second OLT; and
when a fault occurs on an uplink, on the active link, between the first OLT and the switching device, the performing, by the second OLT, active/standby switchover specifically includes:
receiving, by the second OLT, an automatic protection switching APS message from the switching device; unblocking the first PON port; and
instructing, through the second PON port, the first OLT to disable a PON
port that is on the first OLT and that connects to the ONT.

With reference to the first aspect and the foregoing possible implementation manner, in another possible implementation manner, the second OLT connects to the ONT through a first PON port on the second OLT, and the second OLT connects to the first OLT through a second PON port on the second OLT; and
when a fault occurs on a downlink, on the active link, between the first OLT and the switching device, or a fault occurs on a working link, on the active link, between the ONT and the first OLT, the performing, by the second OLT, active/standby switchover specifically includes:
receiving a switching notification message from the first OLT through the second PON port; unblocking the first PON port; and sending an APS message to the switching device.

With reference to the first aspect and the foregoing possible implementation manners, in another possible implementation manner, an active PON port and a standby PON port are disposed on the ONT, and the ONT connects to the first OLT through the active PON port and connects to a first PON port on the second OLT through the standby PON port, and the second OLT connects to the first OLT through a second PON port on the second OLT; and
when a fault occurs on an uplink, on the active link, between the first OLT and the switching device, the performing, by the second OLT, active/standby switchover specifically includes:
receiving an APS message from the switching device; unblocking the first PON port; and sending a force switch request message to the ONT, so that the ONT blocks the active PON port and unblocks the standby PON port.

With reference to the first aspect and the foregoing possible implementation manners, in another possible implementation manner, an active PON port and a standby PON port are disposed on the ONT, and the ONT connects to the first OLT through the active PON port and connects to a first PON port on the second OLT through the standby PON port, and the second OLT connects to the first OLT through a second PON port on the second OLT; and
when a fault occurs on a downlink, on the active link, between the first OLT and the switching device, or a fault occurs on a working link, on the active link, between the ONT and the first OLT, the performing, by the second OLT, active/standby switchover specifically includes:
receiving a switching notification message from the first OLT through the second PON port; unblocking the first PON port; sending an APS message to the switching device; and sending a force switch request to the ONT, so that the ONT blocks the active PON port and unblocks the standby PON port.

According to a second aspect, an embodiment of the present invention further provides an optical line terminal OLT, including:
a first passive optical network PON port, configured to connect to an optical network terminal ONT, where the ONT connects to a switching device by using the OLT, so as to form a standby link;
a network-side port, configured to connect to the switching device, where a second virtual local area network VLAN service channel is set between the network-side port and the switching device;
a second PON port, configured to connect to a first OLT, where the ONT connects to the switching device by using the first OLT, so as to form an active link, a first VLAN service channel is set between the first OLT and the switching device, and the first VLAN service channel and the second VLAN service channel are in a reciprocal active/standby relationship; and a processor, connected to the first PON port, the second PON port, and the network-side port, and configured to: when a fault occurs on the active link, perform active/standby switchover, receive a message from the ONT through the first PON port, and send the message of the ONT to the switching device through the second VLAN service channel.

With reference to the second aspect, in a possible implementation manner, when a fault occurs on an uplink, on the active link, between the first OLT and the switching device,
the network-side port is specifically configured to receive an automatic protection switching APS message from the switching device; and the processor is specifically configured to: unblock the first PON port, and instruct, through the second PON port, the first OLT to disable a PON port that is on the first OLT and that connects to the ONT.

With reference to the second aspect and the foregoing possible implementation manner, in another possible implementation manner, when a fault occurs on a downlink, on the active link, between the first OLT and the switching device, or a fault occurs on a working link, on the active link, between the ONT and the first OLT,
the processor is specifically configured to: receive a switching notification message from the first OLT through the second PON port, unblock the first PON port, and send an APS message to the switching device through the network-side port.

With reference to the second aspect and the foregoing possible implementation manners, in another possible implementation manner, when a fault occurs on an uplink, on the active link, between the first OLT direction and the switching device,
the network-side port is specifically configured to receive an APS message from the switching device; and
the processor is specifically configured to: unblock the first PON port, and send a force switch request message to the ONT through the first PON port, so that the ONT blocks an active PON port and unblocks a standby PON port, where
the ONT connects to the first OLT through the active PON port, and connects to the second OLT through the standby PON port.

With reference to the second aspect and the foregoing possible implementation manners, in another possible implementation manner, when a fault occurs on a downlink, on the active link, between the first OLT and the switching device, or a fault occurs on a working link, on the active link, between the ONT and the first OLT,
the processor is specifically configured to: receive a switching notification message from the first OLT through the second PON port; unblock the first PON port; send an APS message to the switching device; and send a force switch request to the ONT through the first PON port, so that the ONT blocks an active PON port and unblocks a standby PON port, where the ONT connects to the first OLT through the active PON port, and connects to the second OLT through the standby PON port.

According to a third aspect, an embodiment of the present invention further provides a passive optical network PON system, where the PON includes an optical network terminal ONT, a first optical line terminal OLT, a second OLT, and a switching device, where the ONT connects to the switching device by using the first OLT, so as to form an active link, the ONT connects to the switching device by using the second OLT, so as to form a standby link, a first virtual local area network VLAN service channel is set between the first OLT and the switching device, a second VLAN service channel is set between the second OLT and the switching device, and the first VLAN service channel and the second service channel are in a reciprocal active/standby relationship, where
the second OLT is configured to: when a fault occurs on the active link, perform active/standby switchover, receive a message from the ONT, and send the message of the ONT to the switching device through the second VLAN service channel.

According to the service protection method, the OLT, and the system in the PON provided in the embodiments of the present invention, when a fault occurs on an active link, a second OLT performs active/standby switchover, receives service data from an ONT, and sends the service data to a switching device through a second VLAN service channel. In comparison with the prior art in which service protection can only be implemented for a case in which a fault occurs on a working link between a first OLT and a switching device, the second VLAN service channel is set between the second OLT and the switching device, so that when a fault occurs on the active link, the first OLT may perform active/standby switchover, and transmit service data through a standby link, that is, a working link between the ONT and the second OLT and the second VLAN service channel, which not only implements service protection after a fault occurs on a working link between the first OLT and the switching device, but also implements service protection after a fault occurs on the second VLAN service channel, thereby ensuring normal access of service data.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a service protection method in a passive optical network PON according to Embodiment 1 of the present invention;
FIG. 2 is a schematic diagram of composition of a PON system when a TYPE B protection technology is used to perform service protection according to the present invention;
FIG. 3 is a schematic diagram of composition of a PON system when a TYPE C/TYPE D protection technology is used to perform service protection according to the present invention;
FIG. 4 is a flowchart of a service protection method in a passive optical network PON according to Embodiment 2 of the present invention;
FIG. 5 is a flowchart of another service protection method in a passive optical network PON according to Embodiment 2 of the present invention;
FIG. 6 is a flowchart of a service protection method in a passive optical network PON according to Embodiment 3 of the present invention;
FIG. 7 is a flowchart of another service protection method in a passive optical network PON according to Embodiment 3 of the present invention; and
FIG. 8 is a schematic diagram of composition of an optical line terminal OLT according to Embodiment 4 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

All technologies described in this specification may be applied to a passive optical network (Passive Optical Network, PON), where the PON consists of an OLT (Optical Line Terminal, OLT), an optical distribution network (Optical Distribution Network, ODN), an optical network terminal (Optical Network Terminal, ONT)/optical network unit (Optical Network Unit, ONU) at a user side, and an element management system (Element Management System, EMS). The ONU and the ONT differ in that the ONT is directly located at the user side, while there is another network between the ONU and a user, such as an Ethernet. A point-to-multipoint tree topology structure is generally used in the PON network. In a downlink direction, the OLT distributes various services such as IP data, a voice, and a video in a broadcast manner to all ONU units in the PON by using a 1:N passive optical distributor in the ODN; in an uplink direction, various types of service information from all ONUs are coupled to a same optical fiber, without interfering with each other, by using a 1:N passive optical combiner in the ODN, and are finally sent to the OLT.

### Embodiment 1

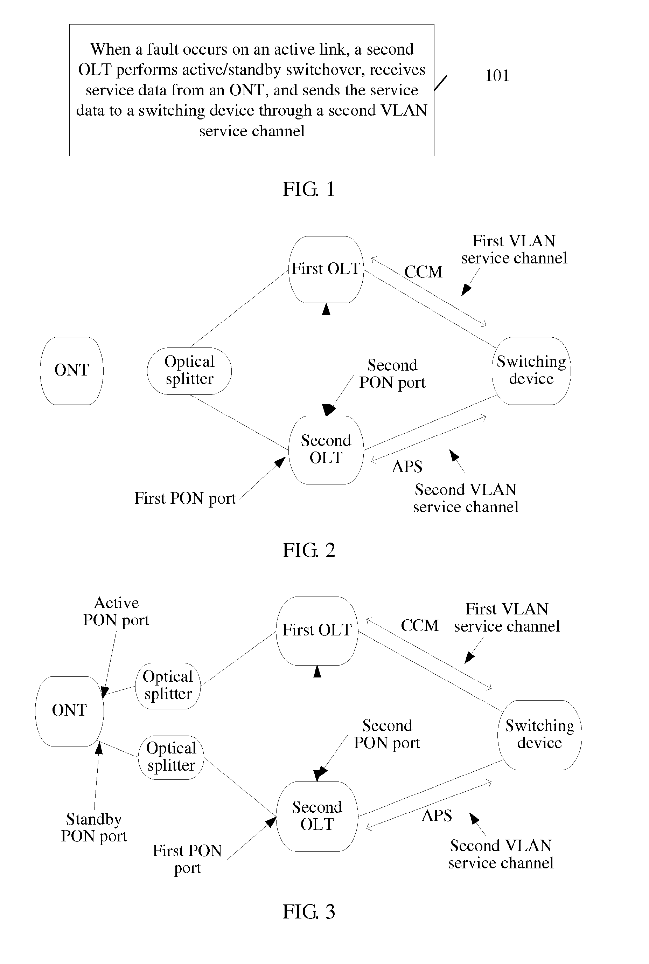

This embodiment of the present invention provides a service protection method in a PON, where the PON includes an ONT, a first OLT, a second OLT, and a switching device. The ONT connects to the switching device by using the first OLT, so as to form an active link, the ONT connects to the switching device by using the second OLT, so as to form a standby link, a first virtual local area network (Virtual Local Area Network, VLAN) service channel is set between the first OLT and the switching device, a second VLAN service channel is set between the second OLT and the switching device, and the first VLAN service channel and the second service channel are in a reciprocal active/standby relationship. As shown in FIG. 1, the method includes:
101. When a fault occurs on the active link, the second OLT performs active/standby switchover, receives service data from the ONT, and sends the service data to the switching device through the second VLAN service channel.

The active link includes a working link between the ONT and the first OLT and the first VLAN service channel, and the first VLAN service channel is a VLAN service channel set between the first OLT and the switching device based on the first OLT. The standby link includes a working link between the ONT and the second OLT and the second VLAN service channel, and the second VLAN service channel is a VLAN service channel set between the second OLT and the switching device based on the second OLT.

Specifically, that a fault occurs on the active link may include the following: A fault occurs on the working link between the ONT and the first OLT; and/or, a fault occurs on an uplink (that is, an uplink on the first VLAN service channel) between the first OLT and the switching device; and/or, a fault occurs on a downlink (that is, a downlink on the first VLAN service channel) between the first OLT and the switching device.

In the present invention, service protection switching is implemented by extending a line TYPE B or TYPE C/TYPE D protection technology and a VLAN-based service linear protection switching mechanism defined in the G.8031 standard.

In an application scenario of this embodiment of the present invention, service protection switching is implemented by using the TYPE B protection technology and the VLAN-based service linear protection switching mechanism defined in the G.8031 standard. FIG. 2 is a schematic diagram of composition of a PON system when service protection switching is implemented by using the TYPE B protection technology and the VLAN-based service linear protection switching mechanism defined in the G.8031 standard according to this embodiment of the present invention.

In this application scenario, the second OLT connects to the ONT through a first PON port on the second OLT, and the second OLT connects to the first OLT through a second PON port on the second OLT.

When a fault occurs on the uplink (that is, the uplink on the first VLAN service channel) that is between the first OLT and the switching device and that is on the active link, that the second OLT performs active/standby switchover specifically includes the following: The second OLT receives an automatic protection switching (Automatic Protection Switching, APS) message from the switching device; unblocks the first PON port; and instructs, through the second PON port, the first OLT to disable a PON port that is on the first OLT and that connects to the ONT.

When a fault occurs on the downlink (that is, the downlink on the first VLAN service channel) that is between the first OLT and the switching device and that is on the active link, or a fault occurs on the working link that is between the ONT and the first OLT and that is on the active link, that the second OLT performs active/standby switchover specifically includes the following: The second OLT receives a switching notification message from the first OLT through the second PON port; unblocks the first PON port; and sends an APS message to the switching device.

In another application scenario of this embodiment of the present invention, service protection switching is implemented by using the TYPE C/TYPE D protection technology and the VLAN-based service linear protection switching mechanism defined in the G.8031 standard. FIG. 3 is a schematic diagram of composition of a PON system when service protection switching is implemented by using the TYPE C/TYPE D protection technology and the VLAN-based service linear protection switching mechanism defined in the G.8031 standard according to this embodiment of the present invention.

In this application scenario, an active PON port and a standby PON port are disposed on the ONT, and the ONT connects to the first OLT through the active PON port and connects to a first PON port on the second OLT through the standby PON port, and the second OLT connects to the first OLT through a second PON port on the second OLT.

When a fault occurs on the uplink (that is, the uplink on the first VLAN service channel) that is between the first OLT and the switching device and that is on the active link, that the second OLT performs active/standby switchover specifically includes the following: The second OLT receives an APS message from the switching device; unblocks the first PON port; and sends a force switch request message to the ONT, so that the ONT blocks the active PON port and blocks the standby PON port. When a fault occurs on the downlink (that is, the downlink on the first VLAN service channel) that is between the first OLT and the switching device and that is on the active link, or a fault occurs on the working link that is between the ONT and the first OLT and that is on the active link, that the second OLT performs active/standby switchover specifically includes the following: The second OLT receives a switching notification message from the first OLT through the second PON port; unblocks the first PON port; sends an APS message to the switching device; and sends a force switch request to the ONT, so that the ONT blocks the active PON port and unblocks the standby PON port.

It should be noted that, as shown in FIG. 2 and FIG. 3, in this embodiment of the present invention, the first VLAN service channel is a VLAN service channel set between the first OLT and the switching device based on the first OLT, and the second VLAN service channel is a VLAN service channel set between the second OLT and the switching device based on the second OLT, which is different from the prior art in which two VLAN service channels used for connecting a second OLT and a switching device are set based on the second OLT only.

According to the service protection method in the PON provided in this embodiment of the present invention, when a fault occurs on an active link, a second OLT performs active/standby switchover, receives service data from an ONT, and sends the service data to a switching device through a second VLAN service channel. In comparison with the prior art in which service protection can only be implemented for a case in which a fault occurs on a working link between a first OLT and a switching device, the second VLAN service channel is set between the second OLT and the switching device, so that when a fault occurs on the active link, the first OLT may perform active/standby switchover, and transmit service data through a standby link, that is, a working link between the ONT and the second OLT and the second VLAN service channel, which not only implements service protection after a fault occurs on a working link between the first OLT and the switching device, but also implements service protection after a fault occurs on the second VLAN service channel, thereby ensuring normal access of service data.

### Embodiment 2

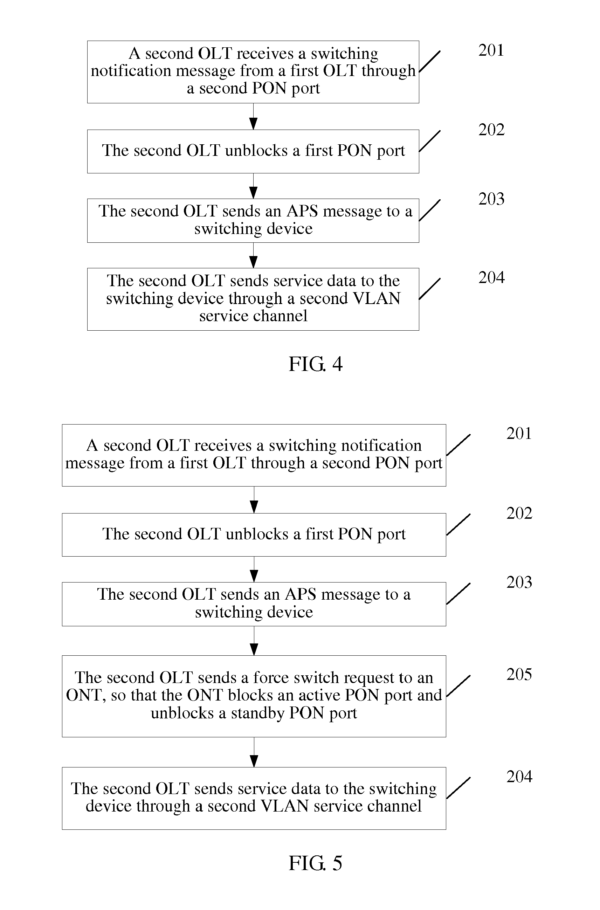

This embodiment of the present invention provides a service protection method in a PON, where the PON includes an ONT, a first OLT, a second OLT, and a switching device. The ONT connects to the switching device by using the first OLT, so as to form an active link, the ONT connects to the switching device by using the second OLT, so as to form a standby link, a first VLAN service channel is set between the first OLT and the switching device, a second VLAN service channel is set between the second OLT and the switching device, and the first VLAN service channel and the second service channel are in a reciprocal active/standby relationship. The method may be applied in a service protection process performed when a fault occurs on a downlink (that is, a downlink on the first VLAN service channel) that is between the first OLT and the switching device and that is on the active link, or a fault occurs on a working link, on the active link, between the ONT and the first OLT. As shown in FIG. 4, the method includes:
201. The second OLT receives a switching notification message from the first OLT through a second PON port.

The first OLT may detect that a fault occurs on the downlink (that is, the downlink on the first VLAN service channel) that is between the first OLT and the switching device and that is on the active link, or that a fault occurs on the working link that is between the ONT and the first OLT and that is on the active link, and send the switching notification message to the second OLT after the fault is detected. Specifically, that the first OLT detects that a fault occurs on the working link between the ONT and the first OLT may include the following: The first OLT detects that a fault occurs on an uplink on the working link between the ONT and the first OLT; and/or, the first OLT detects that a fault occurs on a downlink on the working link between the ONT and the first OLT.

A specific implementation method by which the first OLT detects that a fault occurs on the uplink on the working link between the ONT and the first OLT may include the following: When a fault occurs on the uplink on the working link between the ONT and the first OLT, the first OLT cannot normally receive service data from the ONT; if the first OLT does not receive service data from the ONT in a preset period of time, the first OLT determines that a fault occurs on the uplink on the working link between the ONT and the first OLT. The uplink on the working link between the ONT and the first OLT is a working link in a direction from the ONT to the first OLT.

A specific implementation method by which the first OLT detects that a fault occurs on the downlink on the working link between the ONT and the first OLT may be as follows: When a fault occurs on the downlink on the working link between the ONT and the first OLT, the ONT may detect that the downlink is faulty, and send a downlink fault message to the first OLT through the uplink on the working link between the ONT and the first OLT; and the first OLT may determine, according to the downlink fault message, that a fault occurs on the downlink on the working link between the ONT and the first OLT. The downlink on the working link between the ONT and the first OLT is a working link in a direction from the first OLT to the ONT. A method by which the ONT detects a downlink fault of the working link between the ONT and the first OLT is similar to the method by which the first OLT detects an uplink fault of the working link between the ONT and the first OLT, and details are not described herein again in this embodiment.

Specifically, a method by which the first OLT detects that a fault occurs on the downlink (that is, the downlink on the first VLAN service channel) that is between the first OLT and the switching device and that is on the active link may be as follows: The first OLT detects, by using a continuity check message (Continuity Check Message, CCM), that a fault occurs on the downlink between the first OLT and the switching device.

The CCM may be used to detect connectivity of a link; a receiving party and a sending party periodically exchange CCMs with each other; when several consecutive CCMs are lost, it is determined that the link is faulty. A specific method by which the first OLT detects, by using a CCM, that a fault occurs on the downlink on the first VLAN service channel may be as follows: The first OLT and the switching device periodically sends CCMs to each other; when the first OLT does not receive CCMs from the switching device consecutively in a preset period, the first OLT may determine that a fault occurs on the downlink on the first VLAN service channel. A quantity of CCMs that are not received consecutively may be preset; for example, when the first OLT does not receive three CCMs from the switching device consecutively in a preset period, the first OLT may determine that a fault occurs on the downlink on the first VLAN service channel.

202. The second OLT unblocks a first PON port.

After unblocking the first PON port, the second OLT may receive service data from the ONT and send the service data to the switching device, or send service data received from the switching device to the ONT. That is, the second OLT may transmit service data between the ONT and the switching device through the standby link.

It should be noted that the second OLT connects to the ONT through the first PON port on the second OLT, and the second OLT connects to the first OLT through the second PON port on the second OLT, and backs up, through the second PON port, configuration information and service attribute configuration information that are of a PON port on the first OLT and the ONT to a PON port on the second OLT, so as to ensure that when a fault occurs on the working link and the second OLT is needed to transmit service data, the PON port on the second OLT does not need to perform initialization configuration and service attribute configuration with the ONT, which can improve system performance.

203. The second OLT sends an APS message to the switching device.

The APS message is a protocol specified in a VLAN-based service linear protection switching mechanism defined in the G.8031 standard, and is used to keep consistency of switching results of devices on both ends. The APS message can only be transmitted on a protection service link (that is, a first working link).

Specifically, the second OLT may instruct, by sending the APS message to the switching device, the switching device to switch service data to the second VLAN service channel for transmission, that is, to transmit the service data through the standby link.

204. The second OLT sends service data to the switching device through the second VLAN service channel.

It should be noted that another device may further exist between the second OLT or the first OLT and the switching device, and details about a process of transmitting a packet, signaling, or service data between the second OLT, the first OLT, the switching device, and the another device are not described again in this embodiment. Further, as shown in FIG. 5, when service protection switching is implemented by using a TYPE C/TYPE D protection technology and the VLAN-based service linear protection switching mechanism defined in the G.8031 standard, before step 204 is performed, the method in this embodiment may further include step 205.

205. The second OLT sends a force switch request to the ONT, so that the ONT blocks an active PON port and unblocks a standby PON port.

The active PON port and the standby PON port are disposed on the ONT, and the ONT connects to the first OLT through the active PON port and connects to the first PON port on the second OLT through the standby PON port, and the second OLT connects to the first OLT through the second PON port on the second OLT.

According to the service protection method in the PON provided in this embodiment of the present invention, when a fault occurs on an active link, a second OLT performs active/standby switchover, receives service data from an ONT, and sends the service data to a switching device through a second VLAN service channel. In comparison with the prior art in which service protection can only be implemented for a case in which a fault occurs on a working link between a first OLT and a switching device, the second VLAN service channel is set between the second OLT and the switching device, so that when a fault occurs on the active link, the first OLT may perform active/standby switchover, and transmit service data through a standby link, that is, a working link between the ONT and the second OLT and the second VLAN service channel, which not only implements service protection after a fault occurs on a working link between the first OLT and the switching device, but also implements service protection after a fault occurs on the second VLAN service channel, thereby ensuring normal access of service data.

### Embodiment 3

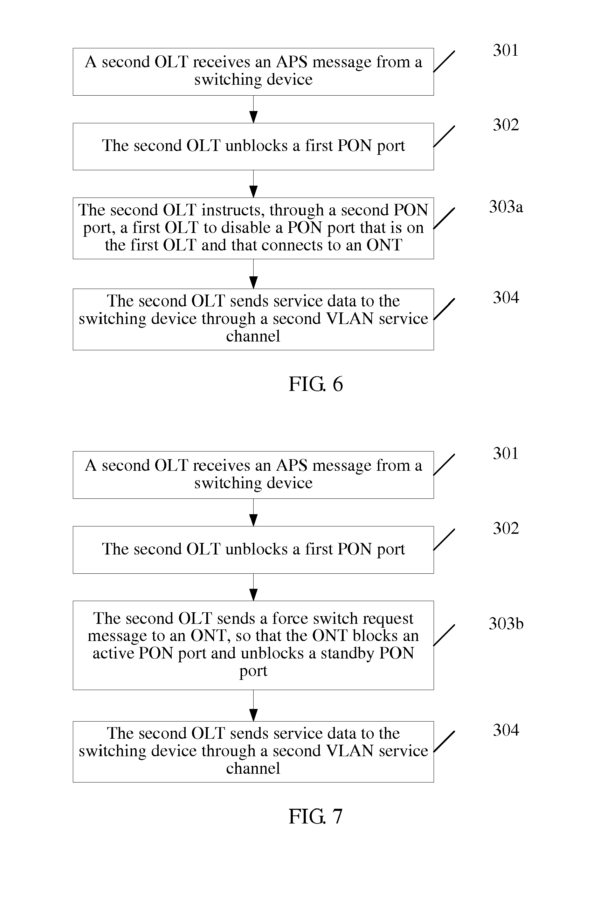

This embodiment of the present invention provides a service protection method in a PON, where the PON includes an ONT, a first OLT, a second OLT, and a switching device. The ONT connects to the switching device by using the first OLT, so as to form an active link, the ONT connects to the switching device by using the second OLT, so as to form a standby link, a first VLAN service channel is set between the first OLT and the switching device, a second VLAN service channel is set between the second OLT and the switching device, and the first VLAN service channel and the second service channel are in a reciprocal active/standby relationship. The method may be applied in a service protection process performed when a fault occurs on an uplink (that is, an uplink on the first VLAN service channel) that is between the first OLT and the switching device and that is on the active link. As shown in FIG. 6, the method includes:
301. The second OLT receives an APS message from the switching device.

The APS message is used to indicate to the second OLT that a fault occurs on the uplink (that is, the uplink on the first VLAN service channel) between the first OLT and the switching device.

The switching device may detect, by using a CCM, that a fault occurs on the uplink (that is, the uplink on the first VLAN service channel) between the first OLT and the switching device. Specifically, the switching device and the first OLT periodically send CCMs to each other; when the switching device does not receive CCMs from the first OLT consecutively in a preset period, the switching device may determine that a fault occurs on the uplink on the first VLAN service channel.

302. The second OLT unblocks the first PON port.

In an application scenario of this embodiment, when service protection switching is implemented by using a TYPE B protection technology and a VLAN-based service linear protection switching mechanism defined in the G.8031 standard, the method in this embodiment includes step 303.

303a. The second OLT instructs, through a second PON port, the first OLT to disable a PON port that is on the first OLT and that connects to the ONT.

In another application scenario of this embodiment of the present invention, as shown in FIG. 7, when service protection switching is implemented by using a TYPE C/TYPE D protection technology and a VLAN-based service linear protection switching mechanism defined in the G.8031 standard, step 303a may be replaced with step 303b.

303b. The second OLT sends a force switch request message to the ONT, so that the ONT blocks an active PON port and unblocks a standby PON port.

It should be noted that another device may further exist between the second OLT or the first OLT and the switching device, and details about a process of transmitting a packet, signaling, or service data between the second OLT, the first OLT, the switching device, and the another device are not described again in this embodiment.

304. The second OLT sends service data to the switching device through the second VLAN service channel.

According to the service protection method in the PON provided in this embodiment of the present invention, when a fault occurs on an active link, a second OLT performs active/standby switchover, receives service data from an ONT, and sends the service data to a switching device through a second VLAN service channel. In comparison with the prior art in which service protection can only be implemented for a case in which a fault occurs on a working link between a first OLT and a switching device, the second VLAN service channel is set between the second OLT and the switching device, so that when a fault occurs on the active link, the first OLT may perform active/standby switchover, and transmit service data through a standby link, that is, a working link between the ONT and the second OLT and the second VLAN service channel, which not only implements service protection after a fault occurs on a working link between the first OLT and the switching device, but also implements service protection after a fault occurs on the second VLAN service channel, thereby ensuring normal access of service data.

### Embodiment 4

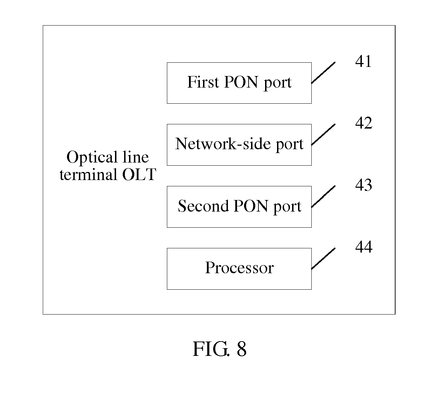

This embodiment of the present invention provides an OLT, as shown in FIG. 8, including: a first PON port 41, a network-side port 42, a second PON port 43, and a processor 44.

The first PON port 41 is configured to connect to an optical network terminal ONT, where the ONT connects to a switching device by using the OLT, so as to form a standby link.

The network-side port 42 is configured to connect to the switching device, where a second virtual local area network VLAN service channel is set between the network-side port and the switching device.

The second PON port 43 is configured to connect to a first OLT, where the ONT connects to the switching device by using the first OLT, so as to form an active link, a first VLAN service channel is set between the first OLT and the switching device, and the first VLAN service channel and the second VLAN service channel are in a reciprocal active/standby relationship.

The processor 44 is connected to the first PON port, the second PON port, and the network-side port and is configured to: when a fault occurs on the active link, perform active/standby switchover, receive a message from the ONT through the first PON port, and send the message of the ONT to the switching device through the second VLAN service channel.

Further, when a fault occurs on an uplink, on the active link, between the first OLT and the switching device, the network-side port 42 is specifically configured to receive an automatic protection switching APS message from the switching device.

The processor 44 is specifically configured to: unblock the first PON port, and instruct, through the second PON port, the first OLT to disable a PON port that is on the first OLT and that connects to the ONT.

Further, when a fault occurs on a downlink, on the active link, between the first OLT and the switching device, or a fault occurs on a working link, on the active link, between the ONT and the first OLT, the processor 44 is specifically configured to: receive a switching notification message from the first OLT through the second PON port, unblock the first PON port, and send an APS message to the switching device through the network-side port.

Further, when a fault occurs on an uplink, on the active link, between the first OLT direction and the switching device, the network-side port 42 is specifically configured to receive an APS message from the switching device.

The processor 44 is specifically configured to: unblock the first PON port, and send a force switch request message to the ONT through the first PON port, so that the ONT blocks an active PON port and unblocks a standby PON port.

The ONT connects to the first OLT through the active PON port, and connects to the second OLT through the standby PON port.

Further, when a fault occurs on a downlink, on the active link, between the first OLT and the switching device, or a fault occurs on a working link, on the active link, between the ONT and the first OLT, the processor 44 is specifically configured to: receive a switching notification message from the first OLT through the second PON port, unblock the first PON port, send an APS message to the switching device; and send a force switch request to the ONT through the first PON port, so that the ONT blocks an active PON port and unblocks a standby PON port.

The ONT connects to the first OLT through the active PON port, and connects to the second OLT through the standby PON port.

It should be noted that, for specific descriptions of some function modules in the OLT provided in this embodiment of the present invention, reference may be made to corresponding content in other embodiments, and details are not described herein again in this embodiment.

According to the OLT provided in this embodiment of the present invention, when a fault occurs on an active link, the OLT performs active/standby switchover, receives service data from an ONT, and sends the service data to a switching device through a second VLAN service channel. In comparison with the prior art in which service protection can only be implemented for a case in which a fault occurs on a working link between a first OLT and a switching device, the second VLAN service channel is set between a second OLT and the switching device, so that when a fault occurs on the active link, the first OLT may perform active/standby switchover, and transmit service data through a standby link, that is, a working link between the ONT and the second OLT and the second VLAN service channel, which not only implements service protection after a fault occurs on a working link between the first OLT and the switching device, but also implements service protection after a fault occurs on the second VLAN service channel, thereby ensuring normal access of service data.

### Embodiment 5

This embodiment of the present invention provides a PON system, where the PON includes an ONT 51, a first OLT 52, a second OLT 53, and a switching device 54. The ONT 51 connects to the switching device 54 by using the first OLT 52, so as to form an active link, the ONT 51 connects to the switching device 54 by using the second OLT 53, so as to form a standby link, a first virtual local area network VLAN service channel is set between the first OLT 52 and the switching device 54, a second VLAN service channel is set between the second OLT 53 and the switching device 54, and the first VLAN service channel and the second service channel are in a reciprocal active/standby relationship.

The second OLT 53 is configured to: when a fault occurs on the active link, perform active/standby switchover, receive a message from the ONT, and send the message of the ONT to the switching device through the second VLAN service channel. According to the PON system provided in this embodiment of the present invention, when a fault occurs on an active link, an OLT performs active/standby switchover, receives service data from an ONT, and sends the service data to a switching device through a second VLAN service channel. In comparison with the prior art in which service protection can only be implemented for a case in which a fault occurs on a working link between a first OLT and a switching device, the second VLAN service channel is set between a second OLT and the switching device, so that when a fault occurs on the active link, the first OLT may perform active/standby switchover, and transmit service data through a standby link, that is, a working link between the ONT and the second OLT and the second VLAN service channel, which not only implements service protection after a fault occurs on a working link between the first OLT and the switching device, but also implements service protection after a fault occurs on the second VLAN service channel, thereby ensuring normal access of service data.

As seen from the description of the foregoing embodiments, it may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A service protection method in a passive optical network PON, wherein the PON comprises an optical network terminal ONT, a first optical line terminal OLT, a second OLT, and a switching device, wherein the ONT connects to the switching device by using the first OLT, so as to form an active link, the ONT connects to the switching device by using the second OLT, so as to form a standby link, a first virtual local area network VLAN service channel is set between the first OLT and the switching device, a second VLAN service channel is set between the second OLT and the switching device, and the first VLAN service channel and the second service channel are in a reciprocal active/standby relationship; and the method comprises:
when a fault occurs on the active link, performing, by the second OLT, active/standby switchover, receiving service data from the ONT, and sending the service data to the switching device through the second VLAN service channel.

2. The method according to claim 1, wherein the second OLT connects to the ONT through a first PON port on the second OLT, and the second OLT connects to the first OLT through a second PON port on the second OLT; and
when a fault occurs on an uplink, on the active link, between the first OLT and the switching device, the performing, by the second OLT, active/standby switchover specifically comprises:
receiving, by the second OLT, an automatic protection switching APS message from the switching device; unblocking the first PON port; and instructing, through the second PON port, the first OLT to disable a PON port that is on the first OLT and that connects to the ONT.

3. The method according to claim 1, wherein the second OLT connects to the ONT through a first PON port on the second OLT, and the second OLT connects to the first OLT through a second PON port on the second OLT; and
when a fault occurs on a downlink, on the active link, between the first OLT and the switching device, or a fault occurs on a working link, on the active link, between the ONT and the first OLT, the performing, by the second OLT, active/standby switchover specifically comprises:
receiving, by the second OLT through the second PON port, a switching notification message from the first OLT; unblocking the first PON port; and sending an APS message to the switching device.

4. The method according to claim 1, wherein an active PON port and a standby PON port are disposed on the ONT, and the ONT connects to the first OLT through the active PON port and connects to a first PON port on the second OLT through the standby PON port, and the second OLT connects to the first OLT through a second PON port on the second OLT; and
when a fault occurs on an uplink, on the active link, between the first OLT and the switching device, the performing, by the second OLT, active/standby switchover specifically comprises:
receiving, by the second OLT, an APS message from the switching device; unblocking the first PON port; and sending a force switch request message to the ONT, so that the ONT blocks the active PON port and unblocks the standby PON port.

5. The method according to claim 1, wherein an active PON port and a standby PON port are disposed on the ONT, and the ONT connects to the first OLT through the active PON port and connects to a first PON port on the second OLT through the standby PON port, and the second OLT connects to the first OLT through a second PON port on the second OLT; and
when a fault occurs on a downlink, on the active link, between the first OLT and the switching device, or a fault occurs on a working link, on the active link, between the ONT and the first OLT, the performing, by the second OLT, active/standby switchover specifically comprises:
receiving, by the second OLT through the second PON port, a switching notification message from the first OLT; unblocking the first PON port; sending an APS message to the switching device; and sending a force switch request to the ONT, so that the ONT blocks the active PON port and unblocks the standby PON port.

6. An optical line terminal OLT, comprising:
a first passive optical network PON port, configured to connect to an optical network terminal ONT, wherein the ONT connects to a switching device by using the OLT, so as to form a standby link;
a network-side port, configured to connect to the switching device, wherein a second virtual local area network VLAN service channel is set between the network-side port and the switching device;
a second PON port, configured to connect to a first OLT, wherein the ONT connects to the switching device by using the first OLT, so as to form an active link, a first VLAN service channel is set between the first OLT and the switching device, and the first VLAN service channel and the second VLAN service channel are in a reciprocal active/standby relationship; and
a processor, connected to the first PON port, the second PON port, and the network-side port, and configured to: when a fault occurs on the active link, perform active/standby switchover, receive a message from the ONT through the first PON port, and send the message of the ONT to the switching device through the second VLAN service channel.

7. The OLT according to claim 6, wherein when a fault occurs on an uplink, on the active link, between the first OLT and the switching device,
the network-side port is specifically configured to receive an automatic protection switching APS message from the switching device; and
the processor is specifically configured to: unblock the first PON port, and instruct, through the second PON port, the first OLT to disable a PON port that is on the first OLT and that connects to the ONT.

8. The OLT according to claim 6, wherein when a fault occurs on a downlink, on the active link, between the first OLT and the switching device, or a fault occurs on a working link, on the active link, between the ONT and the first OLT,
the processor is specifically configured to: receive a switching notification message from the first OLT through the second PON port, unblock the first PON port, and send an APS message to the switching device through the network-side port.

9. The OLT according to claim 6, wherein when a fault occurs on an uplink, on the active link, between the first OLT direction and the switching device,
the network-side port is specifically configured to receive an APS message from the switching device; and
the processor is specifically configured to: unblock the first PON port, and send a force switch request message to the ONT through the first PON port, so that the ONT blocks an active PON port and unblocks a standby PON port, wherein
the ONT connects to the first OLT through the active PON port, and connects to the second OLT through the standby PON port.

10. The OLT according to claim 6, wherein when a fault occurs on a downlink, on the active link, between the first OLT and the switching device, or a fault occurs on a working link, on the active link, between the ONT and the first OLT,
the processor is specifically configured to: receive a switching notification message from the first OLT through the second PON port; unblock the first PON port; send an APS message to the switching device; and send a force switch request to the ONT through the first PON port, so that the ONT blocks an active PON port and unblocks a standby PON port, wherein
the ONT connects to the first OLT through the active PON port, and connects to the second OLT through the standby PON port.

11. A passive optical network PON system, wherein the PON system comprises an optical network terminal ONT, a first optical line terminal OLT, a second OLT, and a switching device, wherein the ONT connects to the switching device by using the first OLT, so as to form an active link, the ONT connects to the switching device by using the second OLT, so as to form a standby link, a first virtual local area network VLAN service channel is set between the first OLT and the switching device, a second VLAN service channel is set between the second OLT and the switching device, and the first VLAN service channel and the second service channel are in a reciprocal active/standby relationship, wherein
the second OLT is configured to: when a fault occurs on the active link, perform active/standby switchover, receive a message from the ONT, and send the message of the ONT to the switching device through the second VLAN service channel.
